Europäisches Patentamt

(19) European Patent Office

Office européen des brevets

(11) Publication number: **0 098 595**
**A2**

# (12) EUROPEAN PATENT APPLICATION

(21) Application number: **83106576.8**

(22) Date of filing: **05.07.83**

(51) Int. Cl.³: **H 05 B 6/62**

---

(30) Priority: **07.07.82 US 396180**

(71) Applicant: **Toxic-Hazardous Waste Destruction, Inc., 160 Uncas Point Road, Guilford Connecticut 06437 (US)**

(43) Date of publication of application: **18.01.84 Bulletin 84/3**

(72) Inventor: **Codina, Jorge G., 223 Secor Road, Hartsdale New York 10530 (US)**

(74) Representative: **Prietsch, Reiner, Dipl.-Ing. et al, Patentanwälte Dipl.-Ing. Dipl. oec. publ. D. Lewinsky, Dipl.-Ing. Reiner Prietsch Gotthardstrasse 81, D-8000 München 21 (DE)**

(84) Designated Contracting States: **AT BE CH DE FR GB IT LI LU NL SE**

---

(54) **Method and apparatus for generating high temperatures.**

(57) A method and apparatus for creating high temperatures for pyrolysis of materials, and utilizing radio frequency (RF) electromagnetic energy is disclosed. The high temperatures are generated in dielectric material located between two coaxial electrodes to which RF power is applied. The material absorbs the RF energy, whereby very high temperatures are produced without the danger of external radiation and without an appreciable loss of heat. Control means are provided for regulating the radio frequency power applied to the electrodes in response to the temperature, and thus the electrical characteristics, of the material being heated.

1

# METHOD AND APPARATUS FOR GENERATING HIGH TEMPERATURES

BACKGROUND OF THE INVENTION

The present invention relates, in general, to the use of radio frequency (RF) energy for creating intense heating effects in an enclosure, and more particularly to a method and apparatus for high temperature treatment of a variety of materials. More specifically, the invention relates to a method and apparatus for pyrolysis of material by generating intense heat in such materials for a variety of purposes, including such diverse processes as the disposal of toxic materials, the disposal of cement dust generated during the manufacture of cement, the refining of precious metals, and the like.

In recent years, there has been an increasing recognition of the serious problem of disposal of waste materials, particularly materials which are toxic. In the past, such materials were routinely dumped in streams, rivers or oceans, buried in the ground, or simply allowed to escape into the atmosphere, with little regard for the consequences of such action. More recently, however, increasing attention has been given to the safe disposal of the various materials which are the inevitable byproduct of society, whether those materials are generated by industrial processes, or are simply the trash and garbage that is collected in cities. The disposal of such materials is a major expense, and with fewer and fewer places being available for the storage of such materials, increasing attention has been paid to devising methods of eliminating waste materials without simply transferring the problem to another location or another time.

The mere dumping of waste materials inevitably produces serious consequences not only for animal and plant life, but for human life as well, for such waste materials not only are unsightly and offensive, but in many cases are found to contain highly toxic material that will not degrade over a period of time, but will simply remain in place. Such problems are caused not only by industrial waste, but by municipal waste as well, the latter often presenting a greater problem not only because of its sheer volume, but because of the wide variety of unknown materials which it contains.

Prior attempts at solving the problem of disposal have not been satisfactory. For example, incineration of waste materials merely changes the nature of the problem, for toxic materials often will not burn at the temperatures present in conventional incinerators, but are simply exhausted to the atmosphere. Complex scrubbers and precipitators are then required to clean the exhaust, but the toxic materials still remain for disposal. One of the more difficult waste products to deal with has been the dust produced in cement manufacuring processes, for conventional techniques have been unsuccessful in eliminating this material.

Attempts have been made to develop methods or apparatus for disposing of toxic and other pollutants through the use of high temperature burning. However, temperatures on the order of 4,000-5,000°F are required for successful elimination of many such materials and conventioal techniques, including inductive or electrostatic heating, have not been successful, except in limited applications. For example, inductive heaters require a conductive material in which electric currents can be induced, while other techniques require excessive amounts of power, produce radiation hazards, create substantial structural problems in the container or electrodes which are used to produce the desired temperatures, and the like. Furthermore, since the electrical characteristics of materials change with temperatures, serious problems of controlling the temperatures produced by such devices have been encountered. Because of these difficulties, it has not been possible to produce an efficient, rapid, easily controlled system for the destruction of toxic and other waste materials.

## SUMMARY OF THE INVENTION

The present invention is directed to a method for generating extremely high temperatures and to apparatus for creating such high temperatures within a closed container under controlled conditions, with the high temperature area being concentrated in a well-defined area for maximum efficiency.

Briefly, the invention is directed to a method of pyrolysis, which for purposes of this disclosure is considered broadly to include burning, reduction, oxydation, or other heat treatments of materials for destroying such materials or producing chemical changes therein through the production of high temperatures, in the range of 4,000-6,000°F for example, by means of concentrated radio frequency energy, and to apparatus for enabling the production of such high temperatures without the danger of external radiation, without damaging the electrodes from which the radio frequency energy is radiated, and without damaging the container material. This is accomplished through the application of RF energy to material contained in a crucible having a coaxial configuration in which the substance to be heated is placed between spaced internal and external electrodes, with the required radio frequency (RF) energy being applied across the two electrodes. In a preferred form of the invention, the external electrode is cylindrical and forms the exterior of a crucible for the material to be heated. The inner surface of the external electrode is lined with a high temperature-resistant ceramic material to form the exterior wall of the crucible, with similar ceramic material being used to form the bottom and top walls thereof. Located at the axis of the crucible is the internal electrode, preferably in the form of a rod, which is surrounded by a high temperature ceramic jacket forming a central cylindrical interior wall for the crucible, the interior and exterior ceramic walls cooperating with the ceramic bottom and top walls to define an annular container for receiving the material to be heated. The top walls of the crucible is in the form of a cover constructed of a high temperature-resistant ceramic material which seals the interior of the crucible, although suitable venting means are provided in the side wall or cover to prevent the buildup of excessive pressure.

A radio frequency power source is connected through a transmission line across the interior and exterior electrodes, with the exterior electrode being at potential, whereby the crucible serves as a termination for the RF transmission line and RF energy is transmitted across the annular space within the container. Suitable temperature sensors are provided to regulate the power applied across the electrodes, and an adjustable choke coil is provided in series in the transmission line between the radio frequency source and the electrode to limit the current flow in the event of a sudden decrease in the resistivity of the material to be heated. This is particularly important since, at the high temperatures involved within the container, a plasma can be created which may result in a short circuit condition within the container which could damage the power supply.

The concentric arrangement of the electrodes serves to concentrate the radio frequency energy in the annular space within the container, whereby any material placed in that space will be subject to pyrolysis through the absorbtion of energy produced by the RF source, and the resultant intense and rapid heating. The exterior cylindrical electrode serves as an RF shield to reduce external radiation and also serves to direct the flow of energy radially across the annular space within the container for maximum transfer of energy to the material to be heated.

By sensing the temperature of the material being treated, the RF energy required can be controlled very accurately. Either the power output level of the RF source or its frequency of operation can be regulated to reach and maintain the desired temperature. If desired, such control can be provided by means of a microprocessor which may operate either to maintain a desired temperature or to provide some other process control, depending on the exact purpose to which the heating system is applied.

The present apparatus includes a closed, sealed, container so that pyrolysis of material can take place in a reduction atmosphere without an exterior exhaust and thus without danger to the environment. Since extremely high temperatures can be generated within the container, toxic materials can be completely destroyed. In addition, in the course of destroying some materials temperatures can be reached to enable a plasma to be generated which may be used as a source of heat energy that can be removed from the container by way of suitable heat exchangers so that the waste material becomes a fuel.

Because high temperatures can be produced within the container very efficiently, the device also is useful in fields other than waste destruction, and becomes, for example, a feasible source of heat energy for processes such as precious metals refining.

BRIEF DESCRIPTION OF THE DRAWINGS

The foregoing and additional objects, features and advantages of the present invention will become apparent to those of skill in the art from a consideration of the following detailed description thereof taken in conjunction with the accompanying drawings, in which:

Fig. 1 is a diagrammatic illustration of a radio frequency heating apparatus constructed in accordance with the present invention; and

Fig. 2 is a perspective, partially sectional view of a modified form of the device of Fig. 1.

DETAILED DESCRIPTION OF THE INVENTION

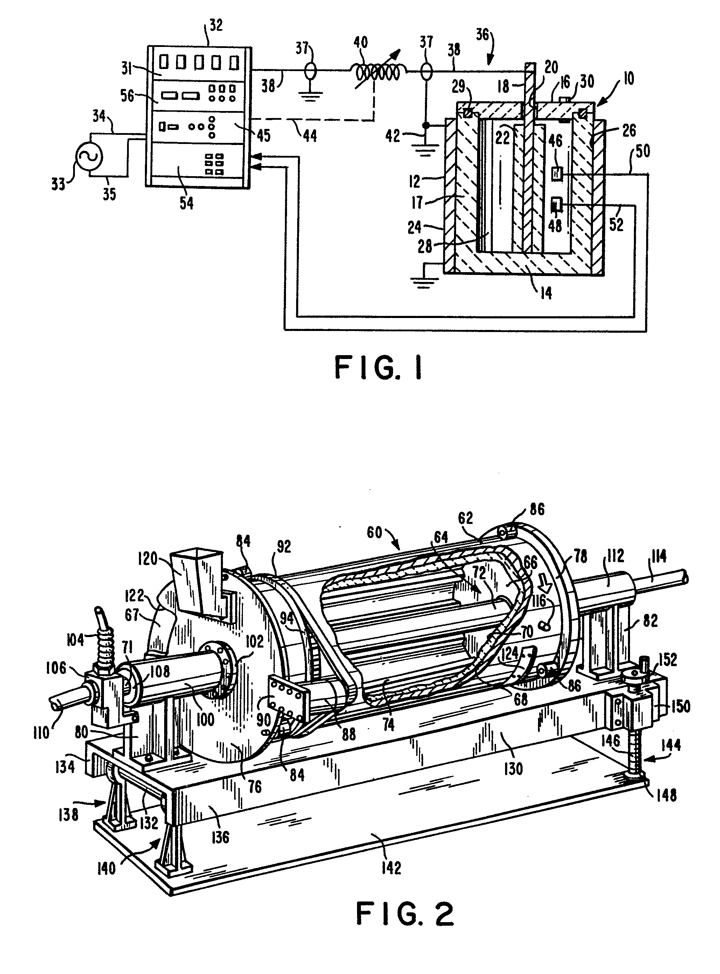

Turning now to a more detailed consideration of the present invention, there is illustrated in Fig. 1 a cross-sectional, diagrammatic view of a crucible 10 adapted to receive material to be heated by radio frequency (RF) electromagnetic waves so as to generate extremely high temperatures within the confines of the crucible. The crucible includes a generally cylindrical side wall 12, an integral bottom wall 14 and a removable cover 16. The side wall 12 is formed with a liner 17 which may be constructed of any of a wide variety of ceramic materials capable of withstanding extremely high temperatures. Preferably the bottom wall 14 and the cover 16 are constructed of the same material.

A central electrode 18 in the form of a rod is mounted within the crucible 10 and preferably is coaxial

0098595

with the cylindrical side wall 12. The electrode 18
extends the full length of the crucible and passes
upwardly through a central aperture 20 in the cover
16 for connection to a source of radio frequency
energy. Within the crucible, the electrode 18 is
surrounded by a jacket or liner, 22 of ceramic material
similar to that used to form the side wall liner 17,
the jacket forming an inner wall for the crucible.

The side wall 12 incorporates a second
electrode 24 which surrounds and is mounted on the
exterior surface 26 of liner 17, the second electrode
being cylindrical, coaxial with electrode 18, and preferably extending substantially the full axial length of
the crucible.

Electrodes 18 and 24 preferably are of a
metal such as stainless steel which is resistant to
the corrosive effects of the material to be heated
in the crucible, and to the high temperatures involved.
Similarly, the ceramic material used for walls 12 and
14 and for the jacket 22 is selected for resistance to
high temperatures and the effects of corrosive
materials.

The side wall liner material 17 and the jacket
22 cooperate to define an annular chamber, or container,
28 which is adapted to receive any material that is to
be treated by the high temperatures available from the
radio frequency energy supplied to the crucible electrodes. Such material may be wastes such as toxic
chemicals, cement dust, and other residual material
produced by various industrial processes, may be
unanalyzed municipal waste material having an unknown
chemical content, or may be other similar materials which
are to be subjected to pyrolytic treatment in the controllable atmosphere within the crucible 10.

In a preferred form of the invention, the cover 16 is secured on the crucible in any convenient manner such as fasteners or latches (not shown) and incorporates an annular seal 29 to form a sealed enclosure. Preferably, a suitable pressure relief valve 30 is provided to permit venting of the interior of the crucible to prevent the buildup of excessive pressures.

Electrical power is supplied to the electrodes 18 and 24 from a conventional radio frequency generator 31 which may, for example, operate in the frequency range of 10 KHz to 10,500 MHz, but preferably at about 1 MHz, at a power output level of about 10 KW, and which may be incorporated in a power generating and control cabinet 32. Line power from source 33 for operation of the radio frequency generator may be supplied to the cabinet by way of lines 34 and 35. Unmodulated RF current from the generator is fed by way of a coaxial transmission line 36 including an outer sheath 37 and an inner conductor 38 to the crucible electrodes 24 and 28, respectively. The inner conductor 28 is connected in series with a variable inductance choke coil 40 which is thus interposed between the radio frequency source 31 and the central electrode 18. The outer sheath 37 of the transmission line is connected to the exterior electrode 24 and also to ground point 42, so that both are at ground potential, so that the electrode 24 serves as a shield to prevent the electromagnetic waves produced in the space between the electrodes by the application of RF power to the electrodes from escaping from the crucible.

The impedance of coil 40 serves to control and limit the current flow to electrode 18, and may be manually variable, if desired. Preferably, however, the inductance of coil 40 is automatically controlled, for example, by means of an electromechanically activated drive shaft 44 operated by a drive circuit 45, to change the value of the inductance in response to conditions measured within the crucible 10, which conditions may vary the electrical conductivity of the material in container space 28 and interposed between electrodes 18 and 24.

In order to determine the conditions within the crucible, appropriate sensors such as a gas analyzer 46, a temperature measuring device 48, or the like depending upon the parameters to be measured, may be provided. Such sensors may be within the crucible or at other suitable locations for providing signals on lines 50 and 52, respectively, which signals are indicative of the conditions within the crucible. This information is supplied to a control circuit 54 within the control box 32 to regulate the inductance 40 and/or to vary the power level or frequency of the output from the radio frequency generator 31 by means of a generator control 56. Preferably, a pre-programmed microprocessor is provided in control circuit 54 to sense the conditions within the crucible and to provide the desired regulation of the RF power supplied to electrodes 18 and 24 so as to maintain a selected temperature, temperature gradient, or other preselected condition within the crucible and to provide automatic control of the start and termination of the process.

The particular control function carried out by the control circuit 54 will depend, among other things, upon the material in the crucible and the process which is to be carried out. Thus, for example, if the material is a toxic waste which is to be destroyed, a prescribed power level might be maintained for a predetermined time after a selected temperature is reached. In the case of waste materials such as cement dust, the process may require a different, higher, temperature for a prescribed period of time, and may result in the production of a plasma within the crucible. Since a plasma is electrically conductive, this operation would result in an effective short circuit between electrodes 18 and 24, and the control circuit 54 must be adapted to prevent damage to the RF generator in such a circumstance. Accordingly, the control circuit will sense the onset of such a condition and produce a change in the impedence of inductor 40 so as to prevent excessive current flow in the system, while still permitting a sufficient level of power to reach the electrodes to maintain optimum conditions within the crucible, including the maintenance of the plasma, if desired. This also allows the radio frequency generator to continue to operate at a high power level without a change in frequency to insure a continuing power source that can be drawn on by additional variations in the inductor to maintain the plasma until the material being burned is completely destroyed. Without the variable choke 40, a short circuit condition produced by a plasma would shut down the RF generator and prematurely end the processing of the material within the crucible. An added benefit of this process is that the plasma so created can be used as a heat source, producing a great deal more heat energy than the electrical energy used during the burning of the fuel within the crucible.

Because the crucible is sealed, the pyrolysis of material within the annular container space 28 can be carried in an environmentally safe reducing atmosphere so that toxic and other waste materials can be completely destroyed without releasing such materials to the surrounding air. Although a vent 30 is provided for safety purposes, to prevent an excessive buildup of pressure within the crucible, it will be understood that any gases escaping from the vent can be captured and stored for later return to the crucible as the pressure is reduced. It will be further understood

0098595

that in some circumstances a supply of oxygen may be fed
to the crucible through a suitable inlet (not shown)
for maintaining desired oxidizing conditions within the
chamber.  Although the crucible is illustrated as having
a vertical axis and a removable but sealable cover for
batch processing of materials, it should be understood
that, if desired, the crucible may be mounted horizontally and may be provided with an inlet and an outlet
for batch or for continuous processing of material.
Such a modification is illustrated in the embodiment of
Fig. 2, to which reference is now made.

A horizontally-oriented, rotatable crucible 60,
constructed in accordance with the principles outlined
in the above description of the embodiment of Fig. 1 is
illustrated in Fig. 2.  The crucible 60 is generally
similar to that of Fig. 1 in that it has a generally
cylindrical exterior side wall 62 defining an interior
container 64 closed at its ends by means of end walls 66
and 67.  The exterior surface of the crucible wall 62
is formed by a stainless steel jacket 68 which serves
as one electrode for the device, while the interior of
the wall is formed of a liner of heat-resistant ceramic
material 70, as are the end walls 66 and 67, as
previously explained with respect to Fig. 1.  The horizontally aligned crucible has a central electrode 71 carrying a ceramic jacket 72 which cooperates with the side
wall 62 to define the annular container spaces 64.  In
this embodiment, the crucible is shown as incorporating
on the interior surface of wall 62 a plurality of longitudinally extending material lifters 74 which serve to
mix the material within the crucible as it rotates
about its axis, as will be explained hereinbelow.  These
lifters are preferably formed of the same ceramic
material as the side wall liner 70.

The crucible 60 is mounted for rotation between two end plates 76 and 78, the end plates being secured in fixed, spaced relationship by means of support brackets 80 and 82, respectively. The crucible is supported between the plates by support rollers 84 carried around the periphery of support plate 78, whereby the crucible can be rotated while remaining in axial alignment with the support plates.

The crucible is rotated by means of an electric motor 88 mounted on a bracket 90 fastened to the support plate 76. The motor drives the crucible by way of a toothed drive belt 92 which engages a corresponding drive track 94 secured on the outer surface of the crucible.

Support plate 76 may conveniently be mounted on bracket 80 by means of a hollow support shaft 100 which is welded or otherwise secured to the bracket 80 and is secured to the support plate 76 by means of a flange 102. The support shaft is axially aligned with the crucible 60 so that electrode 71 can pass from the interior of the crucible through the end wall 67 and into the center of the shaft 100 for connection to a source of radio frequency power supplied by way of a coaxial transmission line 104 and a junction box 106 mounted on bracket 80. Electrode 71 is electrically insulated from support shaft 100 by means of electrically insulated material 108, while the shaft 100, the exterior of junction box 106, the support plate 76 and the electrode 68 are all electrically interconnected, and are at ground potential. It will be understood that the electrode 71 is stationary with respect to the crucible 60 and thus must be journalled in the end wall of the crucible by suitable bearing means to permit relative rotation.

In a preferred form of the invention, the central electrode 71 is hollow so that it can carry cooling water supplied by way of an inlet pipe 110 which is connected to the electrode through junction box 106. Although electrode 71 terminates within the crucible, in the preferred form of the invention, the cooling water passage through the electrode is continued out the opposite end of the crucible, passing through the end wall 66 and through a hollow supporting shaft 112 which serves to connect the end plate 78 to the support bracket 82, in the manner described with respect to shaft 100. The cooling water then exits the crucible by way of outlet pipe 114 for disposal or recirculation, as desired. Preferably, the central outlet pipe 114 is stationary with respect to the rotating crucible, and thus is journalled in the end wall 66 to permit relative rotation in known manner.

As explained with respect to Fig. 1, the crucible preferably is sealed so that the heating of materials, whether for destruction, for metals refining, or for other purposes, can be carried out in a controlled atmosphere. For safety purposes, however, a vent 116 is supplied in the side wall 62, as previously explained.

A feed hopper 120 is mounted on the support plate 76 for supplying material to be treated to the interior of the crucible. The outlet end of the hopper passes through the plate 76, and this opening is adapted for alignment with a corresponding opening (not shown) in the end wall 67 of the crucible so that upon proper alignment of the crucible with the support plate 76, material may be fed to the interior chamber 64. A suitable cover is provided for the opening, which cover may be reached by way of a cutout portion 122 formed in the support plate 76. Thus, to fill the crucible 60, it is rotated to align the opening with the cutout portion 122, the cover is removed, the drum is rotated into alignment with the hopper 120, and the drum is filled. Thereafter the opening is again aligned with the cutout portion 122 for replacement of the cover.

Further access to the interior of the crucible is provided by way of an exit slot formed in the side wall 62. This exit slot is closed by a removeable cover 124 which is fastened to the side wall and which may be easily removed. It will be apparent that the cover 124 must be secured against the high pressures that can build up within the crucible, and further must be sealed to prevent leakage of the gases developed within the chamber 64. The interior of the cover preferably is in the form of a tight-fitting plug of ceramic material of the same type used for the wall liner 70 to insure proper insulation of the crucible wall.

In one form of the invention, the crucible 60 and its supporting structure is mounted by means of support brackets 80 and 82 on a tiltable platform 130, pivotally supported at one end by means of a shaft 132. This shaft extends between and is secured to downwardly extending edge flanges 135 and 136 which form a part of the platform 130. The shaft is journalled in a pair of pillow blocks 138 and 140 supported on a base 142. The end of platform 130 opposite to the location of shaft 132 is adjustably supported on base 142 by means of a pair of screw jacks, one of which is illustrated at 144.

Jack 144 consists of a threaded shaft 146 having a first end 148 resting on base 142. The threaded shaft passes through a threaded block 150 which is secured to platform 130, for example, by means of fasteners passing through the downwardly extending flange 136. A crank 152 is provided at the top end of the threaded shaft whereby the shaft may be rotated to cause it to thread through block 150 to raise or lower the end of platform 130 by pivoting it about the axis of shaft 132. This allows adjustment of the angle of the crucible axis with respect to the horizontal to permit easy loading and unloading of the crucible and to insure even distribution of the material within it during the heating process.

In the operation of the crucible illustrated in diagrammatic form in Fig. 1 and in the preferred embodiment of Fig. 2, the radio frequency source 32 supplies radio frequency energy at a power level sufficiently high to raise the temperature of the material within the crucible to between 4,000 and 6,000°F, depending upon the material being treated and the nature of the process being performed. Thus, for example, a temperature of 4,000°F is believed to be adequate to destroy most toxic waste material, while at about 5,000°F cement dust can be burned to form a plasma. At about 4,000°F, precious metal-containing ore can be refined. It has been found in a test model of the configuration illustrated in Fig. 1, that 50-pound batches of material can be processed at power levels of 10 kilowatts, with the generator operating at a frequency of one megaHertz.

The coaxial electrodes provided in the crucible of the present invention creates, in effect, a termination for an RF transmission line with the material contained within the crucible serving as a dielectric between the electrodes and with the radio frequency electromagnetic energy radiated by the central electrode passing radially into the material. This radial flow of electromagnetic energy from the central electrode insures that the material will be evenly treated throughout the crucible. The electromagnetic field is concentrated within the crucible, with the outer electrode serving as an RF shield to prevent losses and to insure that the device is not dangerous to the operators. Further, by concentrating the energy within the crucible, heating occurs only the material to be treated, and not in the walls of the container, so that the level of power does not exceed that required for heating or burning the material. Furthermore, it has been found that the material is heated from the inside toward the outside of the crucible so that the exterior walls of the crucible remain relatively cool, thus further reducing energy losses and preventing damage to the exterior wall of the container as well as reducing the amount of insulation required. Although neither the center electrode nor the crucible wall reach the temperature level of the material being treated, they can be further protected by providing suitable cooling of the center electrode in the manner illustrated in Fig. 2 and by similarly cooling the exterior wall.

Since the electrical characteristic of the material being treated will change with temperature and with variations in the nature of the material, control of the electrical power supplied to the crucible is essential, and this requires careful monitoring of the conditions within the crucible. Various temperature sensing techniques may be used, but in the test unit which has been operated, temperature measurement was done by means of infrared pyrometers located outside the crucible, with a suitable window being provided in the crucible wall. A programmed microprocessor responds to the temperature measurement, or may simply operate on a preset time schedule, in order to maintain a predetermined temperature within the crucible to carry out a heat treatment process, to destroy material completely, to cause the system to shut down when a specified process has been completed, or the like. As previously indicated, such control can be used to produce extremely high temperature flames within the crucible and can produce plasmas that can be used as a source of heat. As previously explained, when this occurs the plasma produces an electrical short circuit at the termination of the transmission line and the series inductor 40 is then adjusted to maintain damage to it. The inductor may be so adjusted as to maintain a selected level of current flow through the plasma so as to produce enough heat therein to maintain the plasma until the fuel within the crucible is consumed.

Although the invention has been illustrated in terms of a batch process, with the crucible adapted to receive predetermined quantities of material for treatment, it will be apparent that a continuous feed system can be produced, whereby the material to be treated is fed continuously to the crucible during its operation. Further variations and modifications may be made without departing from the true spirit and scope thereof as set forth in the following claims.

CLAIMS

1. A method of producing high temperatures in materials for pyrolysis of such materials, comprising:

locating materials to be heated within a container defined between inner and outer walls, said walls including first and second electrodes, respectively;

generating electromagnetic energy at a radio frequency;

supplying said radio frequency energy across said electrodes to produce a radio frequency field between said electrodes, whereby said material will absorb said energy and will be heated thereby, said radio frequency energy being supplied at a power level and frequency sufficient to raise the temperature of said material to at least 4,000°F.

2. The method of claim 1, wherein said radio frequency is unmodulated.

3. The method of claim 1, further including controlling said radio frequency energy in response to changes in the electrical conductivity of said material.

4. Apparatus for producing high temperatures in materials for pyrolysis of such materials, comprising:

a crucible having interior and exterior walls defining a heating chamber adapted to receive material to be heated;

a first electrode in said interior wall;

a second electrode in said exterior wall;

a source of radio frequency electrical energy;

a transmission line connecting said source across said first and second electrodes to produce an electromagnetic radio frequency field in said heating chamber;

variable impedance means in series with said transmission line; and

control means responsive to conditions within said chamber for varying said impedance to regulate
such conditions.

5. The apparatus of claim 4, wherein said first
and second electrodes are concentric, said second
electrode being substantially cylindrical in shape.

6. The apparatus of claim 5, wherein said first
electrode is located substantially at the axis of said
crucible.

7. The apparatus of claim 4, further including
removable cover means for said crucible, said cover means
being sealable to close said crucible, whereby a sealed
container for the material to be heated is provided.

8. The apparatus of claim 4, wherein said
transmission line is a coaxial line having a central
conductor and an outer sheath, and wherein said central
conductor is connected to said first electrode and said
sheath is connected to said second electrode, whereby
said crucible forms a termination for said transmission
line and any material to be heated which may be located
in said heating chamber of said crucible serves as a
dielectric between the terminating first and second
electrodes to absorb radio frequency electromagnetic
energy radiated by said first electrode.

9. The apparatus of claim 8, wherein said sheath
and said second electrode are connected to ground potential,
whereby said second electrode serves as a shield to
prevent radio frequency energy from escaping from said
crucible.

10. The apparatus of claim 9, wherein said
variable impedance means comprises a coil connected in
series with said central conductor, and wherein said
control means comprising means for varying the inductance of said coil to regulate said electromagnetic
field in said heating chamber.

11. The apparatus of claim 4, wherein said crucible is substantially cylindrical in shape, and further including means for mounting said crucible for rotation about its axis.

12. The apparatus of claim 11, further including cooling means for said first electrode.

FIG. 1

FIG. 2